# EUROPEAN PATENT APPLICATION

(11) **EP 4 794 037 A1**
(43) Date of publication of application: **19.08.2026**
(21) Application number: 25736247.5
(22) Date of filing: 02.01.2025
(51) Int. Cl.: H01M 10/04, H01M 50/256, B65G 35/06, B65G 43/08

(54) **CYLINDRICAL SECONDARY BATTERY MANUFACTURING DEVICE AND MANUFACTURING METHOD**

(30) Priority: 02.01.2024 KR 20240000175
(71) Applicant: LG Energy Solution, Ltd., Seoul 07335 (KR)
(72) Inventor: LEE, Sung Min, Daejeon 34122 (KR); CHAE, Seung Hun, Daejeon 34122 (KR); EOM, Chan Yong, Daejeon 34122 (KR); KWON, Jae Woo, Daejeon 34122 (KR)
(74) Representative: Goddar, Heinz J.
(86) International application number: PCT/KR2025/000031
(87) International publication number: WO 2025/147093

(57) **Abstract**

The present invention relates to a cylindrical secondary battery manufacturing device and a cylindrical secondary battery manufacturing method, which relates to a cylindrical secondary battery manufacturing device and a cylindrical secondary battery manufacturing method, capable of effectively performing line balancing in a circulation manufacturing line.

According to one example of the present invention, it is possible to provide a cylindrical secondary battery manufacturing device and a cylindrical secondary battery manufacturing method, which are characterized by comprising a plurality of sensors provided along a buffer line provided between preceding equipment and succeeding equipment, to calculate loading degrees of carriers step-by-step in the buffer line; and a controller adjusting process speeds of the preceding equipment and the succeeding equipment based on the step-by-step loading degrees calculated through combinations of outputs of the plurality of sensors, thereby balancing the process speeds of the preceding equipment and the succeeding equipment, and controlling to track the overall target process speed.

## Description

### Technical Field

The present invention relates to a cylindrical secondary battery manufacturing device and a cylindrical secondary battery manufacturing method, which relates to a cylindrical secondary battery manufacturing device and a cylindrical secondary battery manufacturing method, capable of effectively performing line balancing in a circulation manufacturing line.

### Background Art

Generally, as the supply of portable small electrical and electronic devices is spread, development of new type secondary batteries such as nickel-metal hydride batteries or lithium secondary batteries is actively underway. Recently, lithium secondary batteries have been widely used for automobiles as well as power tools.

The lithium secondary battery means a battery using carbon such as graphite as a negative electrode active material, a lithium containing oxide as a positive electrode material, and a non-aqueous solvent as an electrolyte.

Such a secondary battery is manufactured in the form of a battery assembly by accommodating an electrode assembly, in which a positive electrode, a separator, and a negative electrode are sequentially measured, in an exterior material such as a pouch or a cylindrical can. Thereafter, a process of injecting the electrolyte into the battery assembly using an electrolyte injection device is performed. Depending on the shape of the exterior material, secondary batteries can be classified into pouch, cylindrical, and rectangular types.

Since the volume and weight of the exterior material in the pouch-type secondary battery are relatively small, there is an advantage that an energy density per volume is high. In addition, when a battery module is formed through pouch-type secondary batteries, it has a small void space, so that there is an advantage that an energy density per volume is high.

It can be regarded that cylindrical secondary batteries have an advantage of being manufactured faster than other types of secondary batteries, and cylindrical cans (exterior material) and caps can be manufactured using nickel-plated steel sheets, whereby they have an advantage of high durability and strength of the secondary batteries themselves.

The manufacturing process of the cylindrical secondary battery may comprise the following processes. First, a process of inserting an electrode assembly inside a cylindrical can may be performed. At this time, a negative electrode of the electrode assembly may be electrically connected to the can.

After the insertion process, a filling process may be performed in which an electrolyte is filled inside the cylindrical can. Thereafter, a casing process may be performed in which the positive electrode of the electrode assembly is connected to the cap, and then the cap is coupled with the cylindrical can.

In some cases, an outer periphery of the cylindrical secondary battery after completion of the casing process is contaminated with the electrolyte. Such an electrolyte may cause welding damage between the can and the cap or cause insulation failure. Therefore, a cleaning process is generally performed after the casing process is completed.

The cleaning process may comprise a washing process of cleaning the cylindrical secondary battery through a cleaning liquid, a blower process of removing the cleaning liquid remaining in the cylindrical secondary battery after the washing process through air drift, and a drying process of evaporating the cleaning liquid after the blower process.

In addition, the manufacturing process of the cylindrical secondary battery may comprise an insertion process, a negative electrode process of welding a negative electrode of the electrode assembly to the cylindrical case, and a beading process of forming an upper outer periphery of the cylindrical case for casing.

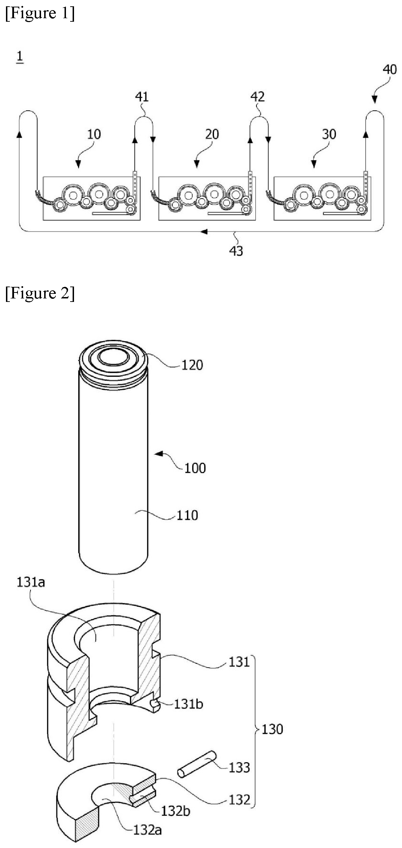

Figure 1 illustrates one example of a cylindrical secondary battery manufacturing device.

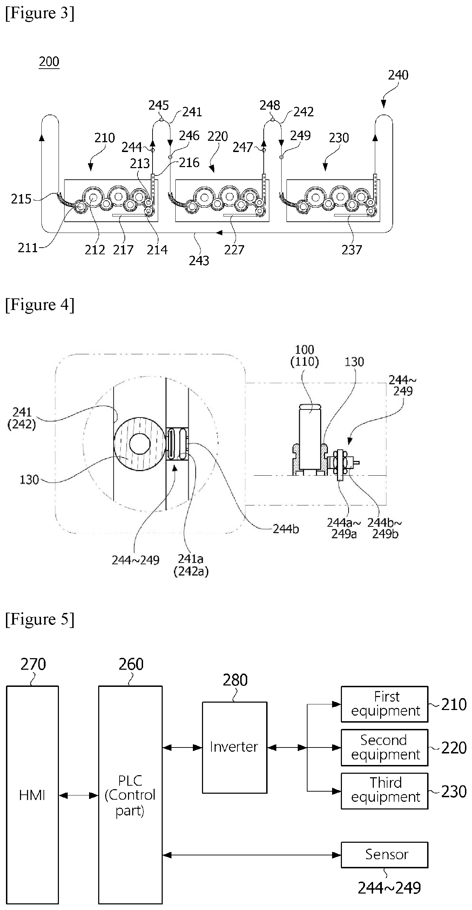

A plurality of process devices (10, 20, 30) is connected through a circulation manufacturing line (40). In a state where a cylindrical can or a cylindrical secondary battery is mounted on a carrier (see Figures 2 and 3), it is circulated while being transferred along a circulation manufacturing line. That is, each process device may be a partial constitution of a circulation manufacturing line.

The manufacturing device comprises first equipment (10), second equipment (20), and third equipment (30), where the first equipment may be washing equipment, the second equipment may be blower equipment, and the third equipment may be drying equipment. In addition, the first equipment may be insertion equipment, filling equipment, and casing equipment. Alternately, it may comprise insertion equipment, negative electrode welding equipment, and beading equipment. That is, a plurality of continuous processes may be continuously performed through a single circulation manufacturing line (40).

The cylindrical can or cylindrical secondary battery is mounted on the carrier, and then fed into the initial equipment, i.e., the first equipment (10), and while the carrier, on which the cylindrical can or cylindrical secondary battery is mounted, sequentially passes through the equipment, the relevant processes may be performed. The cylindrical can or cylindrical secondary battery is separated from the carrier discharged from the last equipment, i.e., the third equipment (30). Then, the empty carrier may move further along the circulation manufacturing line (40) to accommodate the cylindrical can or cylindrical secondary battery, and then may be fed back into the initial equipment.

Here, the circulation manufacturing line (40) may be referred to as a closed path including each equipment (10, 20, 30), a buffer line (41) between the first equipment (10) and the second equipment (20), a buffer line (42) between the second equipment (20) and the third equipment (30), and a return line (43) between the third equipment (30) and the first equipment (10).

The buffer lines (41, 42) may be referred to as carrier transfer paths for input and waiting for the next process after the previous process is completed, and the return line (43) may be referred to as a carrier transfer path for empty carriers to be resupplied to the first equipment (10) after all processes are completed.

Therefore, in order that each process equipment performs the process with optimal efficiency, the process speed of another continuous process equipment must also be optimally controlled. That is, a manufacturing line balance or circulation line balance must be achieved. Such a balance requires that the quantity of carriers currently being circulated through the circulation manufacturing line must be optimally maintained. Through this, it is possible to meet the manufacturing speed, i.e., the manufacturing quantity per minute, targeted in one device (1).

However, as the manufacturing process is performed, the process speeds of some equipment may be relatively fast and the process speeds of some equipment may be relatively slow. As one example, if the process speed of the preceding equipment is fast, an unnecessary waiting time is required to enter the process through the succeeding equipment. Conversely, if the process speed of the preceding equipment is slow, the succeeding equipment has no choice but to wait without performing the process. Therefore, the line balance is broken in the circulation manufacturing line, and as a result, the target manufacturing speed cannot be satisfied.

Due to this problem, it is necessary to find a way capable of optimally maintaining, managing, and controlling the line balance in the circulation manufacturing line.

### Disclosure

### Technical Problem

It is an object of the present invention to solve the problems of the conventional cylindrical secondary battery manufacturing device and control method.

Through one example of the present invention, it is intended to provide a secondary battery manufacturing device and a secondary battery manufacturing method capable of optimally managing and controlling a line balance in a circulation manufacturing line.

Through one example of the present invention, it is intended to provide a secondary battery manufacturing device and a control method thereof capable of allowing a worker to easily input a target speed as a manufacturing amount per minute, and automatically controlling a frequency through a controller and an inverter.

Through one example of the present invention, it is intended to provide a secondary battery manufacturing device and a control method thereof capable of easily modifying the conventional manufacturing device, and controlling a line balance by identifying loading degrees step-by-step through addition of sensors.

Through one example of the present invention, it is intended to provide a secondary battery manufacturing device and a control method thereof capable of identifying loading degrees step-by-step by combining sensing values of sensors, and thus easily tracking and controlling a target speed by performing speed control of equipment step-by-step.

### Technical Solution

In order to achieve the above-described objects, according to one example of the present invention, it is possible to provide a cylindrical secondary battery manufacturing device and a cylindrical secondary battery manufacturing method that a carrier, on which a cylindrical case is mounted, is transferred in a manufacturing line to manufacture a cylindrical secondary battery, wherein the cylindrical secondary battery manufacturing device and the cylindrical secondary battery manufacturing method are characterized by comprising a plurality of sensors provided along a buffer line provided between preceding equipment and succeeding equipment, to calculate loading degrees of the carriers step-by-step in the buffer line; and a controller adjusting process speeds of the preceding equipment and the succeeding equipment based on the step-by-step loading degrees calculated through combinations of outputs of the plurality of sensors, thereby balancing the process speeds of the preceding equipment and the succeeding equipment, and controlling to track the overall target process speed.

The buffer line is a part of the manufacturing line, which may be referred to as a carrier movement path provided between the preceding equipment and the succeeding equipment so that the carrier, whose preceding process has been completed, is fed into the succeeding equipment and waited.

The manufacturing line may be formed continuously from the preceding equipment, the buffer line, and the succeeding equipment. In addition, the manufacturing line is a circulation manufacturing line, which may comprise a return line leading from the succeeding equipment to the preceding equipment. Only empty carriers from which cylindrical cases or cylindrical secondary batteries are separated move in the return line, and the empty carriers may be coupled with the cylindrical cases or cylindrical secondary batteries, and reintroduced into the preceding equipment.

According to the present example, it may comprise two processing equipment, that is, the preceding equipment and the succeeding equipment, performing detailed processes in one manufacturing device.

It is preferable that the sensors are provided at a plurality of preset points along the buffer line. The sensor may be a contact sensor sensing contact with the carrier to output a signal.

It is preferable that the controller calculates loading degrees step-by-step by combining outputs of a plurality of sensors.

The controller may calculate a frequency of an inverter in real time based on the calculated step-by-step loading degrees to apply it to the inverter. The inverter frequency may be input to each equipment so that the process speed may be controlled in each equipment.

It may comprise an interface for a worker to input the target process speed, and the target manufacturing speed may be a quantity of products per minute (PPM).

The process speeds of the preceding equipment and the succeeding equipment are determined by the applied inverter frequency.

The controller may automatically calculate a quantity of products produced per minute and the inverter frequency corresponding thereto.

It is preferable that the controller calculates the frequency of the inverter in real time based on the target process speed, the fed back process speeds of the preceding equipment and the succeeding equipment, and the calculated step-by-step loading degrees to apply it to the inverter.

Upon the initial manufacturing device driving, the preceding equipment and the succeeding equipment may be operated at the process speed based on the inverter frequency calculated by the input ppm. Thereafter, an imbalance in the process speed between the preceding equipment and the succeeding equipment may occur.

Therefore, the controller may adjust the process speed using the fed back current process speed and the calculated step-by-step loading degrees. This process speed adjustment may be performed by recalculating the inverter frequency and then applying the recalculated frequency to the inverter. This process may be performed in real time.

It is preferable that as the loading degree in the buffer line has a higher stage, the controller controls the process speed of the succeeding equipment to be increased and the process speed of the preceding equipment to be decreased.

It is preferable that as the loading degree in the buffer line has a lower stage, the controller controls the process speed of the succeeding equipment to be decreased and the process speed of the preceding equipment to be increased.

Stages of the loading degrees may comprise a shortage stage, an appropriate stage, and an excess stage. For example, the shortage stage may be 30% loading, the appropriate stage may be 50% loading, and the excess stage may be 70% loading. The sensors may be provided at a position corresponding to a length of 30%, a position corresponding to a length of 50%, and a position corresponding to a length of 70%, respectively, from the anterior end of the buffer line along the length of the buffer line.

The sensors may comprise an excess detection sensor provided at a position biased toward the anterior end of the buffer line, an appropriate detection sensor provided at a middle position of the buffer line, and a shortage detection sensor provided at a position biased toward the posterior end of the buffer line.

As one example, the shortage stage may be 30% loading, the appropriate stage may be 50% loading, and the excess stage may be 70% loading. The sensors may be provided at a position corresponding to a length of 30%, a position corresponding to a length of 50%, and a position corresponding to a length of 70%, respectively, from the anterior end of the buffer line along the length of the buffer line.

When the carriers are sensed only by the shortage detection sensor, it may be determined to be a shortage stage; when the carriers are sensed only by the shortage detection sensor and the appropriate detection sensor, it may be determined to be an appropriate stage; and when the carriers are sensed by the shortage detection sensor, the appropriate detection sensor, and the excess detection sensor, it may be determined to be an excess stage.

It is preferable that when a detection signal of the carriers is continuously generated by the sensor for a preset time, it is determined for the sensor to sense the carriers. This reason is for sensing for the carriers in a loaded, that is, stagnant state to contact the sensor. When the carrier in a simply moving state is in contact with the sensor, it may be sensed as the contact for only a relatively short time. Therefore, when a contact signal is continuously generated for approximately 2 to 3 seconds or so, it may be determined as a signal for determining a loading capacity.

In order to achieve the above-described objects, according to one example of the present invention, in a cylindrical secondary battery manufacturing device that a carrier, on which a cylindrical case is mounted, is transferred and circulated in a circulation manufacturing line to manufacture a cylindrical secondary battery, the device may comprise: preceding equipment, middle equipment, and succeeding equipment, which are continuously provided as a part of the circulation manufacturing line and perform relevant processes as the carrier moves; a first buffer line, which is provided as a part of the circulation manufacturing line, and is provided in the preceding equipment and the middle equipment so that the carrier in which a previous process has been completed is input to a next process and waited; and a second buffer line, which is provided as a part of the circulation manufacturing line, and is provided in the middle equipment and the succeeding equipment so that the carrier in which a previous process has been completed is input to a next process and waited.

It is preferable that the manufacturing device comprises a plurality of sensors provided to calculate loading degrees of the carriers step-by-step in the first buffer line and the second buffer line, and provided in each of the first buffer line and the second buffer line.

The manufacturing device may comprise a controller adjusting process speeds of the preceding equipment, the middle equipment, and the succeeding equipment based on the step-by-step loading degrees calculated through the outputs of the sensors, and thus controlling to track a target process speed through the circulation manufacturing line.

In the present example, three sub-equipment for performing the relevant process is provided, and each sub-equipment may be connected continuously to form a part of one circulation manufacturing line.

It is preferable that the sensor is provided at a plurality of preset points along each of the buffer lines.

The sensor may be a contact sensor sensing contact with the carrier to output a signal.

The controller may calculate loading degrees step-by-step by combining the outputs of the plurality of sensors.

Stages of the loading degrees may comprise a shortage stage, an appropriate stage, and an excess stage.

The sensors may comprise an excess detection sensor provided at a position biased toward the anterior end of the buffer line, an appropriate detection sensor provided at a middle position of the buffer line, and a shortage detection sensor provided at a position biased toward the posterior end of the buffer line.

It is preferable that the controller is controlled to track the target manufacturing speed with eight speed control patterns by combinations of increase and decrease in the process speeds of the preceding equipment, the middle equipment, and the succeeding equipment based on the step-by-step loading degrees in the first buffer line and the second buffer line.

In order to achieve the above-described objects, according to one example of the present invention, it may provide a cylindrical secondary battery manufacturing method in which a carrier, on which a cylindrical case is mounted, is transferred along a manufacturing line to manufacture a cylindrical secondary battery, wherein the cylindrical secondary manufacturing method comprises: a step of applying a frequency calculated from a controller based on a target process speed (ppm) input to an interface by a worker to an inverter; a step in which the preceding equipment and the succeeding equipment perform relevant processes at relevant process speeds based on the frequency applied through the inverter; a step of calculating a loading degree of carriers loaded on a buffer line using output signals of a plurality of sensors installed on the buffer line provided between the preceding equipment and the succeeding equipment; and a step of adjusting the process speeds of the preceding equipment and the succeeding equipment based on the calculated loading degree.

It is preferable that the sensor is a contact sensor sensing contact with the carrier to output a signal, and the controller calculates the loading degrees step-by-step by combining the outputs of the sensors.

When the carrier detection signal is continuously generated by the sensor for a preset time, it may be determined as a valid signal for calculating the loading degree of the carriers step-by-step from the sensor.

At least one of the plurality of sensors may be provided to calculate the current process speed of the relevant equipment. The current process speed may be easily calculated through the quantity of contact signals per minute with the carrier discharged after the process is completed. The maintenance time of the contact signal may vary depending on the loading degree of the carriers.

It is preferable that the controller recalculates the frequency of the inverter in real time based on the target process speed, the fed back process speeds of the preceding equipment and the succeeding equipment, and the calculated step-by-step loading degrees to apply it to the inverter. That is, the process speed may be varied based on the recalculated inverter frequency.

According to the present example, line balancing may be easily performed through addition of sensors and addition of a simple control algorithm.

### Advantageous Effects

Through one example of the present invention, it is possible to provide a secondary battery manufacturing device and a secondary battery manufacturing method capable of optimally managing and controlling a line balance in a circulation manufacturing line.

Through one example of the present invention, it is possible to provide a secondary battery manufacturing device and a control method thereof capable of allowing a worker to easily input a target speed as a manufacturing amount per minute, and automatically controlling a frequency through a controller and an inverter.

Through one example of the present invention, it is possible to provide a secondary battery manufacturing device and a control method thereof capable of easily modifying the conventional manufacturing device, and controlling a line balance by identifying loading degrees step-by-step through addition of sensors.

Through one example of the present invention, it is possible to provide a secondary battery manufacturing device and a control method thereof capable of identifying loading degrees step-by-step by combining sensing values of sensors, and thus easily tracking and controlling a target speed by performing speed control of equipment step-by-step.

### Description of Drawings

Figure 1 illustrates an arrangement appearance of a conventional cylindrical secondary battery manufacturing device,
Figure 2 illustrates a disassembled appearance (before assembly) of a carrier and a cylindrical secondary battery,
Figure 3 illustrates an arrangement appearance of a cylindrical secondary battery manufacturing device according to one example of the present invention,
Figure 4 illustrates a contact appearance of a contact sensor and a carrier in a cylindrical secondary battery manufacturing device according to one example of the present invention,
Figure 6 illustrates a control constitution of a cylindrical secondary battery manufacturing device according to one example of the present invention, and

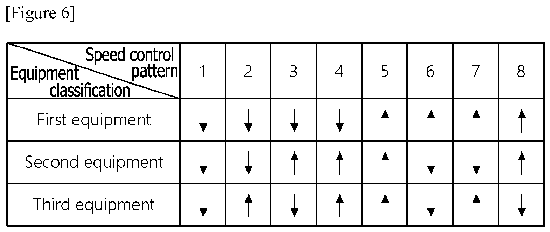

Figure 6 illustrates combinations of process speed control patterns of a cylindrical secondary battery manufacturing device according to one example of the present invention.

### Best Mode

Hereinafter, with reference to the attached drawings, a cylindrical secondary battery manufacturing device according to one example of the present invention will be described in detail.

First, a carrier applicable to one example of the present invention will be described in detail with reference to Figure 2.

As illustrated in Figure 2, the battery (100) comprises a cylindrical case (110) and a cap (120), and the central portion of the cap (120) can form a positive electrode and the central portion of the lower surface of the case can form a negative electrode. Figure 2 illustrates a central cross-section of the carrier (130).

The cylindrical case (110) or the battery (100) can be fed into and discharged from process facilities in a state where it is partially accommodated in the carrier (130). When all processes are completed, the battery (100) is separated from the carrier (130).

The carrier (130) may be formed as a single carrier by assembling a plurality of parts. For example, a main body (131), a lower body (132), and a coupling pin (133) may be assembled to each other to form a single carrier. The carrier (130) may be formed in a hollow cylinder shape.

An insertion groove (131a) into which a cylindrical case or battery is inserted may be formed on the upper part of the carrier (130), and a fluid inlet (132a) may be formed on the lower part. The insertion groove (131a) may be formed at a certain depth from the upper part of the carrier (130). The diameter of the insertion groove (13) may be formed to be slightly larger than the diameter of the battery (100). The lower part of the battery (10) may be inserted into the insertion groove (131a) at a certain depth, and the insertion depth may be 1/5 to 1/3 or so of the length of the battery (100). The case (110) or the battery (10) is transferred along a circulation manufacturing line in a state where it is mounted on the carrier (130), i.e., in an upright state.

The fluid inlet (132a) may be formed to be continuous from the lower part of the carrier (130) to the insertion groove (131a), and the diameter of the fluid inlet (132a) may be formed smaller than the diameter of the insertion groove (131a) and the battery diameter. Through the fluid inlet, the cleaning liquid or air may be supplied and discharged from the outside to the case (110).

The carrier (130) may be formed entirely of an insulating material. It may be formed of a rubber material to protect the case or the battery during the transfer process. Particularly, the main body (131) and the lower body (132) may be formed of an insulating material, and may be formed of the same material. The coupling pin (133) may be a spring pin, and through-holes (131b, 132b) for inserting and fixing the coupling pin (133) may be formed in the main body (131) and the lower body (132), respectively.

Hereinafter, a cylindrical secondary battery manufacturing device according to one example of the present invention will be described in detail with reference to Figure 3.

As illustrated, a cylindrical secondary battery manufacturing device according to one example of the present invention may be identical to or like the conventional manufacturing device illustrated in Figure 1. However, according to the present example, the circulation line balance may be effectively performed through addition of some constitutions and addition of some control logics.

According to the present example, the first equipment (210), the second equipment (220), and the third equipment (230) are connected in series so that the respective processes may be performed in series. Each equipment may constitute a part of one circulation manufacturing line (240).

Here, each equipment may be equipment performing the same or continuous process. For example, the first equipment (210) is cleaning equipment, which may perform a washing process, a blower process, and a drying process of a cylindrical secondary battery. The secondary battery cleaned through the first equipment (210) may be repeatedly cleaned through the second equipment (220) and the third equipment (230). As one example, three cleaning processes may be performed continuously.

Of course, each equipment may be equipment performing different processes. As one example, the first equipment (210) is washing equipment, which may perform a washing process, the second equipment (220) is blower equipment, which may perform a blower process, and the third equipment (230) is a drying equipment, which may also perform a drying process.

A buffer line (241) is provided between the first equipment (210) and the second equipment (220). The cylindrical case or secondary battery in which the process in the first equipment (210) has been completed may be discharged to the buffer line (241), and may be input into the second equipment (220) through the buffer line (241). That is, the buffer line (241) may be referred to as a line waiting for the next process after the preceding process is completed.

Here, it is preferable that the process speed balance between the first equipment (210) and the second equipment (220) is optimally maintained and managed. As one example, when the waiting time in the buffer line (241) is short, it means that the process speed of the first equipment (210) is relatively slow or the process speed of the second equipment (220) is relatively fast. Also, when the waiting time in the buffer line (241) is long, it means that the process speed of the first equipment (210) is relatively fast or the process speed of the second equipment (220) is relatively slow.

Here, the first equipment (210) may be referred to as the preceding equipment, and the second equipment (220) may be referred to as the succeeding equipment.

As one example, the preceding equipment (210) may comprise a plurality of process wheels (212), a plurality of input wheels (211), and a discharge wheel (213). The carrier (130) transferred to a first input wheel (211) through an input buffer line (215) is moved to the process wheel (212) as the input wheel (211) rotates. In this instance, the process wheel (212) also rotates.

The input wheel (211) is provided between the process wheel (212) and the process wheel (212) to play a role in feeding the carrier discharged from the previous process wheel (212) to the next process wheel (212). As one example, three input wheels (212) and three process wheels (212) are illustrated in Figure 3. As each process wheel (212) rotates, the relevant process may be performed.

The carrier (130) discharged from the last process wheel is moved to the discharge buffer line (216) through the discharge wheel (213), and then moved to the next equipment along the buffer line (241).

Meanwhile, during the process in which the process proceeds through the preceding equipment (210), a defective secondary battery may be sensed, and the defective secondary battery may be discharged through a discharge line (217) or a defect discharge outlet out of the circulation manufacturing line (240). Through operation of a defect wheel (214) connected to the discharge wheel (213), the defective secondary battery may be discharged through the defect discharge outlet together with the carrier.

The detailed structure of the preceding equipment (210) may be the same as or like that of the middle equipment (220) and the succeeding equipment (230).

According to the present example, the defect discharge outlet or defect discharge line (217, 227, 237) of each equipment (210, 220, 230) may be provided with an auxiliary sensor assembly capable of sensing a carrier (130) to be discharged.

In the manufacturing device (200), a plurality of detailed processes is performed sequentially to finally manufacture a finished product or a semi-finished product. Therefore, when some detailed processes are relatively fast or slow, the manufacturing speed of the manufacturing device (200) may not be optimally maintained and managed. Therefore, there is a need for a way to optimally maintain the waiting time in the buffer line (241).

To this end, a plurality of sensors (244, 245, 246) may be provided in the buffer line (241). The plurality of sensors may be provided along the buffer line (241).

The plurality of sensors may be provided to calculate the loading degrees of the carriers in the buffer line step-by-step. A high loading degree means a long waiting time, and a low loading degree means a short waiting time. Therefore, by identifying the loading degrees step-by-step, the process speeds of the preceding equipment and the succeeding equipment may be appropriately controlled. Through this, the current manufacturing speed of the manufacturing device (200) may be controlled to track the target manufacturing speed. The current manufacturing speed and the target manufacturing speed may be referred to as the current process speed and the target process speed, respectively. The unit may be ppm.

It is preferable that the sensors are provided at a plurality of preset points along the buffer line (241). As one example, the carriers are loaded from the exit end of the buffer line (241), and are loaded while the carriers are in contact or close contact with each other therebetween. This may be referred to as the loading line or stagnation line of the carriers. That is, the loading degree may be determined by determining the length of the stagnation line of the carriers.

As one example, the sensors may be installed at a length point of 30%, a length point of 50%, and a length point of 70% from the inlet end of the buffer line (241), respectively, based on the total length of the buffer line. These points may be referred to as the upper, middle, and lower loading degree points, or may be referred to as the shortage, appropriate, and excess loading degree points.

It can be known that the appropriate degree can be sensed in more detail by increasing the number of points where sensors are installed in the buffer line.

One manufacturing device (200) may be provided with two equipment connected to each other in series, and in this case, one buffer line may be provided between two equipment. At this time, the manufacturing speed of the manufacturing device (200) may be managed and controlled through multiple sensors provided in one buffer line.

As shown in Figure 3, one manufacturing device (200) may be provided with three equipment connected to each other in series. In this case, a buffer line may be provided between each equipment and each equipment, and thus two buffer lines may be provided in total. That is, a buffer line (242) may be provided between the second equipment (220) and the third equipment (230).

Similarly, the buffer line (242) may also be provided with multiple sensors (246, 247, 249).

All the multiple sensors (244 to 249) are the same sensors and may be mounted with the same structure.

As shown in Figure 4, through-holes (241a, 242a) may be formed in side walls or housings forming the buffer lines (241, 242), and the sensors may be mounted in the form of an assembly by penetrating the through-holes.

The sensor assemblies (244 to 249) may comprise mounting brackets (244a) and sensors (244b). Here, it is preferable that the sensor (244b) is a contact sensor. That is, the sensor (244b) is preferably a sensor generating a corresponding signal when it is in contact with a carrier (130) moving along the buffer lines (241, 242). If the contact is sensed while the carrier (130) simply moves, the corresponding signal may be generated only for a very short time. However, if the contact is sensed while the carrier (130) is stationary, the corresponding signal may be generated while the contact is maintained.

Since the sensors (244 to 249) do not sense simple contact, but sense stagnation, it may be determined as stagnation when the contact maintenance time is maintained for approximately 2 to 3 seconds or more. That is, it may be determined as a valid signal when the contact signal is generated and maintained for a preset time.

Meanwhile, the stagnation of the carriers occurs from the exit end of the buffer line (241, 242). Therefore, when the sensing result from the sensor (246, 249) at the stagnation position of 30% is determined as being valid, it can be known that at least the stagnation, i.e. the loading degree, is 30% or more. Also, when the sensing result from the sensor (246, 249) at the stagnation position of 30% and the sensor (245, 248) at the stagnation position of 50% are determined as being valid, it can be known that at least the stagnation, i.e. the loading degree, is 50% or more. In addition, when the sensing results from all the 30% sensor, the 50% sensor, and the sensor (244, 247) at the stagnation position of 70% are determined as being valid, it can be known that at least the stagnation, i.e., the loading level, is 70% or more.

Therefore, the loading degree may be determined step-by-step by combining the valid sensing values of multiple sensors provided on the buffer line. Here, when the valid sensing value is defined as on and the invalid sensing value is defined as off, and when the sensors are mounted at the 30% position, 50% position, and 70% position, the combinations of the valid sensing values may appear in a very wide variety of ways. However, all combinations other than the combinations of (on, on, on), i.e., 70% loading, (on, on, off), i.e., 50% loading, and (on, off, off), i.e., 30% loading, may be determined as invalid combinations.

Hereinafter, the control constitution of the manufacturing device (200) will be described in detail with reference to Figure 5.

Through the sensor assemblies (244 to 249) or the contact sensors (244b to 249b), it is possible to sense that the carrier is in contact with the sensor for a set time. The sensors may be provided on the buffer lines (241, 242).

The control part or controller (260) may be implemented in the form of a PLC (programmable logic controller), and the controller (260) receives signals through the contact sensors (244b to 249b). It determines whether the received signals are valid signals. That is, it determines whether the received signals are signals generated for a preset time. As one example, the signal indicating continuous contact for 3 seconds or more may be determined as a valid signal.

The controller (260) combines the valid signals of the relevant contact sensors. Through these combinations, it is possible to calculate the loading degrees step-by-step. That is, it is possible to determine which stage of loading state is in a specific buffer line.

The controller (260) may control the process speed of each equipment (210, 220, 230) through the inverter (280). The process speed of the equipment may be controlled through the frequency (Hz) applied by the inverter (280). That is, it can be regarded that the higher the frequency, the higher the process speed, and the lower the frequency, the lower the process speed.

Meanwhile, the process speed of the manufacturing device (200) may be basically input by a worker. To this end, an interface (270) may be provided, and the interface may be implemented in the form of an HMI (human machine interface).

The process speed (target speed) input by the user through the interface (270) may be transmitted to the inverter (280) through the control part (260), and the process speed may be determined based on the frequency applied by the inverter (280). However, due to the imbalance in the process speed of each detailed equipment, a deviation of the loading stage in the buffer lines occurs, whereby the overall line balance may be broken. Ultimately, there is a problem that it is difficult to track the target speed.

Also, the target speed is defined as the production quantity manufactured per minute (PPM, product per minute) in the manufacturing device (200), where conventionally, the target PPM had to be converted into the frequency of the manufacturing device and input. That is, the worker manually calculated the frequency corresponding to the target PPM and then inputted it into the interface (270). Therefore, the control part (260) simply performed the function of transmitting it between the interface (270) and the inverter (280). In addition, to change the target speed, the worker had no choice but to reinput the new target speed into the interface.

However, according to the present example, the worker can input the target speed, that is, the target PPM, into the interface. The control part (260) can control the process speed for each equipment based on the target speed input by the worker, the fed back process speeds of the preceding equipment and the succeeding equipment, and the calculated step-by-step loading degrees.

As one example, the control part (260) can determine the target speed input by the worker and the process speed of the manufacturing device. The process speed of the manufacturing device can be identified by determining the quantity of products discharged from the manufacturing device after the process is completed. The current process speed of the manufacturing device is fed back to the control part (260), so that the control part (260) can identify the deviation between the target speed and the current speed.

Basically, to increase the manufacturing speed by increasing the target speed, the process speed of each manufacturing device must be increased. At this time, one process equipment may be operated in accordance with the target process speed, but another process equipment may not be operated in accordance with the target process speed. This may be a phenomenon caused by the destruction of the line balance.

Therefore, according to the present example, the loading degrees in each buffer line are determined step-by-step to control the process speed of each equipment, whereby it can be consequently managed and controlled to manufacture the products at the optimal process speed, that is, the speed that the manufacturing device targets.

That is, the controller (260) can control the process speed by calculating the frequency of the inverter in real time based on the target manufacturing speed, the fed back current process speed, and the calculated step-by-step loading degrees. The controller (260) can control the process speed in real time by calculating the frequency applied to the inverter in real time. Therefore, even if the worker simply inputs the target speed in PPM through the interface, the controller (260) can calculate and apply the frequency of the inverter applied to the inverter in real time.

The controller (260) can control the process speed of the succeeding equipment to increase and the process speed of the preceding equipment to decrease as the stage of the loading degree in one buffer line increases. The controller (260) can control the process speed of the succeeding equipment to decrease and the process speed of the preceding equipment to increase as the stage of the loading degree in one buffer line decreases. Through this control tendency, the overall line balance can be appropriately managed and controlled.

As described above, the buffer line is provided between the detailed equipment and the detailed equipment, the process speed of each detailed equipment can be appropriately controlled, and especially when there are three or more detailed equipment, the process speed can be controlled to meet the target speed of the manufacturing device more effectively. In this case, the buffer line between the preceding equipment and the middle equipment can be called the first buffer line, and the buffer line between the middle equipment and the succeeding equipment can be called the second buffer line.

Figure 6 shows combinations of control patterns in a manufacturing device (200) consisting of three sub-equipment (210, 220, 230).

The speed increase and decrease combinations of the first equipment and the second equipment can be generated through the loading stage in the buffer line between the first equipment (210) and the second equipment (220), and the speed increase and decrease combinations of the second equipment and the third equipment can be generated through the loading stage in the buffer line between the second equipment (220) and the third equipment

(230). Such combinations can be expressed as eight different speed control patterns as the combinations for the increase and decrease of the process speed. Such speed control patterns are consequently intended to track the process speed of the entire manufacturing device at the target speed by optimally maintaining the loading amount in each buffer line.

Of course, in some cases, the process speed of each detailed equipment needs to be maintained at the current process speed. If such combinations are included, the combinations of speed control patterns can be further increased.

### Industrial Applicability

It is described in the Detailed Description of Invention.

## Claims

1. A cylindrical secondary battery manufacturing device that a carrier, on which a cylindrical case is mounted, is transferred along a manufacturing line to manufacture a cylindrical secondary battery, wherein the cylindrical secondary battery manufacturing device is **characterized by** comprising:
preceding equipment performing a preceding process of manufacturing a cylindrical secondary battery as the carrier moves;
succeeding equipment performing a succeeding process of manufacturing a cylindrical secondary battery as the carrier moves after the preceding process;
a buffer line provided, as a part of the manufacturing line, between the preceding equipment and the succeeding equipment so that the carrier, in which the preceding process has been completed, is input into the succeeding equipment, and waited; and
a plurality of sensors provided along the buffer line, to calculate loading degrees of the carriers step-by-step in the buffer line; and
a controller adjusting process speeds of the preceding equipment and the succeeding equipment based on the step-by-step loading degrees calculated through combinations of outputs of the plurality of sensors, thereby controlling to track a target process speed through the circulation manufacturing line.

2. The cylindrical secondary battery manufacturing device according to claim 1, **characterized in that**
the sensors are provided at a plurality of preset points along the buffer line.

3. The cylindrical secondary battery manufacturing device according to claim 2, **characterized in that**
the sensor is a contact sensor sensing contact with the carrier to output a signal.

4. The cylindrical secondary battery manufacturing device according to claim 3, **characterized in that**
the controller calculates a frequency of an inverter in real time based on the calculated step-by-step loading degrees to apply it to the inverter, and controls the process speeds of the preceding equipment and the succeeding equipment with the calculated frequency.

5. The cylindrical secondary battery manufacturing device according to claim 3, **characterized by** comprising
an interface for a worker to input the target process speed, wherein the target process speed is a quantity of products per minute (PPM).

6. The cylindrical secondary battery manufacturing device according to claim 5, **characterized in that**
the controller calculates the frequency of the inverter in real time based on the target process speed, the fed back process speeds of the preceding equipment and the succeeding equipment, and the calculated step-by-step loading degrees to apply it to the inverter.

7. The cylindrical secondary battery manufacturing device according to claim 4, **characterized in that**
as the loading degree in the buffer line has a higher stage, the controller controls the process speed of the succeeding equipment to be increased and the process speed of the preceding equipment to be decreased.

8. The cylindrical secondary battery manufacturing device according to claim 4, **characterized in that**
as the loading degree in the buffer line has a lower stage, the controller controls the process speed of the succeeding equipment to be decreased and the process speed of the preceding equipment to be increased.

9. The cylindrical secondary battery manufacturing device according to claim 4, **characterized in that**
stages of the loading degrees comprise a shortage stage, an appropriate stage, and an excess stage.

10. The cylindrical secondary battery manufacturing device according to claim 4, **characterized in that**
when a detection signal of the carriers is continuously generated by the sensor for a preset time, it is determined as a valid signal for calculating the loading degree of the carriers step-by-step from the sensor.

11. A cylindrical secondary battery manufacturing device that a carrier, on which a cylindrical case is mounted, is transferred and circulated in a circulation manufacturing line to manufacture a cylindrical secondary battery, wherein the cylindrical secondary battery manufacturing device is **characterized by** comprising:
preceding equipment, middle equipment, and succeeding equipment, which are continuously provided as a part of the circulation manufacturing line and perform relevant processes as the carrier moves;
a first buffer line, which is provided as a part of the circulation manufacturing line, and is provided in the preceding equipment and the middle equipment so that the carrier in which a previous process has been completed is input to a next process and waited; and
a second buffer line, which is provided as a part of the circulation manufacturing line, and is provided in the middle equipment and the succeeding equipment so that the carrier in which a previous process has been completed is input to a next process and waited; and
a plurality of sensors provided to calculate loading degrees of the carriers step-by-step in the first buffer line and the second buffer line, and provided in each of the first buffer line and the second buffer line; and
a controller adjusting process speeds of the preceding equipment, the middle equipment, and the succeeding equipment based on the step-by-step loading degrees calculated through the outputs of the sensors, and thus controlling to track a target process speed through the circulation manufacturing line.

12. The cylindrical secondary battery manufacturing device according to claim 11, **characterized in that**
the sensor is provided at a plurality of preset points along each of the buffer lines.

13. The cylindrical secondary battery manufacturing device according to claim 12, **characterized in that**
the sensor is a contact sensor sensing contact with the carrier to output a signal.

14. The cylindrical secondary battery manufacturing device according to claim 13, **characterized in that**
the controller calculates the loading degrees step-by-step by combining the outputs of the plurality of sensors, and when a detection signal of the carriers is continuously generated by the sensor for a preset time, it is determined as a valid signal for calculating the loading degree of the carriers step-by-step from the sensor.

15. The cylindrical secondary battery manufacturing device according to claim 11, **characterized in that**
as the loading degree in the buffer line has a higher stage, the controller controls the process speed of the succeeding equipment to be increased and the process speed of the preceding equipment to be decreased.

16. The cylindrical secondary battery manufacturing device according to claim 11, **characterized in that**
as the loading degree in the buffer line has a lower stage, the controller controls the process speed of the succeeding equipment to be decreased and the process speed of the preceding equipment to be increased.

17. A cylindrical secondary battery manufacturing method, in a cylindrical secondary battery manufacturing device that a carrier, on which a cylindrical case is mounted, is transferred along a manufacturing line to manufacture a cylindrical secondary battery, comprising:
a step of applying a frequency calculated from a controller based on a target process speed (ppm) input to an interface by a worker to an inverter;
a step in which the preceding equipment and the succeeding equipment perform relevant processes at relevant process speeds based on the frequency applied through the inverter;
a step of calculating a loading degree of carriers loaded on a buffer line using output signals of a plurality of sensors installed on the buffer line provided between the preceding equipment and the succeeding equipment; and
a step of adjusting the process speeds of the preceding equipment and the succeeding equipment based on the calculated loading degree.

18. The cylindrical secondary battery manufacturing method according to claim 17, **characterized in that**
the sensor is a contact sensor sensing contact with the carrier to output a signal, and the controller calculates the loading degrees step-by-step by combining the outputs of the sensors.

19. The cylindrical secondary battery manufacturing method according to claim 18, **characterized in that**
when a detection signal of the carriers is continuously generated by the sensor for a preset time, it is determined as a valid signal for calculating the loading degree of the carriers step-by-step from the sensor.

20. The cylindrical secondary battery manufacturing method according to claim 17, **characterized in that**
the controller recalculates the frequency of the inverter in real time based on the target process speed, the fed back process speeds of the preceding equipment and the succeeding equipment, and the calculated step-by-step loading degrees to apply it to the inverter.
